# EUROPEAN PATENT APPLICATION

(11) **EP 4 588 713 A1**
(43) Date of publication of application: **23.07.2025**
(21) Application number: 24217755.8
(22) Date of filing: 05.12.2024
(51) Int. Cl.: B60L 53/20, B60L 53/22, B60L 53/24, B60L 53/60, B60L 53/62

(54) **CHARGING SWITCHING APPARATUS, AND CHARGING CONTROL SYSTEM AND CONTROL METHOD**

(30) Priority: 11.12.2023 CN 202311697745
(71) Applicant: XPT EDS (Hefei) Co., Ltd., Hefei City, Anhui 230601 (CN)
(72) Inventor: ZHANG, Qiong, Hefei City, Anhui 230601 (CN); ZHOU, Daiping, Hefei City, Anhui 230601 (CN); ZHOU, Haibo, Hefei City, Anhui, 230601 (CN)
(74) Representative: Vossius & Partner Patentanwälte Rechtsanwälte mbB

(57) **Abstract**

The disclosure relates to a charging switching apparatus, a charging control system and control method, an electronic device, and a vehicle. The charging switching apparatus according to the disclosure is connected between a battery of a vehicle and a charging facility external to the vehicle, and includes a boost capacitor and a first switch. The charging switching apparatus is configured to perform boost charging on the battery of the vehicle via the boost capacitor and an inductance of a motor winding of the vehicle by using the charging facility in a boost charging mode, where the first switch is connected between the boost capacitor and one of two output terminals of the charging facility.

## Description

### TECHNICAL FIELD

The disclosure generally relates to the field of charging and discharging, and in particular, to a charging switching apparatus, a charging control system and control method, an electronic device, and a vehicle.

### BACKGROUND ART

Currently, there is still a problem of a voltage mismatch between a charging facility and a battery that needs to be charged. For example, a low voltage of a charging pile cannot be converted to a high voltage required by a vehicle battery pack for battery charging. Known boost charging methods require a high hardware cost, are not compatible with direct charging at a high power, and have safety problems such as an electric shock when used.

### SUMMARY

In order to solve or at least alleviate one or more of the above problems, the following technical solutions are provided.

According to a first aspect of the disclosure, there is provided a charging switching apparatus, which is connected between a battery of a vehicle and a charging facility external to the vehicle, and includes a boost capacitor and a first switch. The charging switching apparatus is configured to perform boost charging on the battery of the vehicle via the boost capacitor and an inductance of a motor winding of the vehicle by using the charging facility in a boost charging mode, where the first switch is connected between the boost capacitor and one of two output terminals of the charging facility.

According to the charging switching apparatus of an embodiment of the disclosure, the charging switching apparatus is further configured to connect the two output terminals of the charging facility to positive and negative buses of the battery in a direct charging mode, to directly charge the battery of the vehicle.

According to the charging switching apparatus of an embodiment of the disclosure, the charging switching apparatus is further configured to connect a terminal of the boost capacitor connected to the first switch to a neutral point of the motor winding in the boost charging mode for precharging the boost capacitor, and respectively connect the two output terminals of the charging facility to the neutral point and one of two electrodes of the battery after precharging of the boost capacitor is completed.

According to the charging switching apparatus of an embodiment of the disclosure, the charging switching apparatus further includes a second switch, a third switch, and a fourth switch, wherein the second switch and the third switch are respectively arranged on two, positive and negative buses between the charging facility and the battery, the fourth switch is connected between a terminal of the boost capacitor connected to the first switch and a neutral point of the motor winding, and the other terminal of the boost capacitor is connected to one of two electrodes of the battery.

According to the charging switching apparatus of an embodiment of the disclosure, the charging switching apparatus is further configured to turn off the first switch in response to a charging end signal.

According to a second aspect of the disclosure, there is provided a charging control system, which is connected between a charging facility and a battery. The charging control system includes a motor drive system connected across two electrodes of the battery and includes a motor winding. The charging control system further includes the charging switching apparatus according to any one of the preceding embodiments.

According to a third aspect of the disclosure, there is provided a charging control method for controlling the charging control system according to the preceding embodiment. The method includes the steps of: S 1: precharging the boost capacitor in response to a boost charging control signal; S2: connecting the battery to the charging facility via a neutral point of the motor winding of the charging control system, and positive and negative buses of the battery; and S3: performing boost charging on the battery via the precharged boost capacitor and the inductance of the motor winding by controlling a plurality of bridge arm switches of the motor drive system.

According to the charging control method according to an embodiment of the disclosure, the charging control method further includes connecting the two output terminals of the charging facility to the positive and negative buses of the battery in response to a direct charging control signal, to directly charge the battery.

According to the charging control method according to an embodiment of the disclosure, the charging control method further includes turning off the first switch in response to a charging end signal.

According to a fourth aspect of the disclosure, there is provided an electronic device. The electronic device includes a processor, and a memory storing instructions that, when executed by the processor, cause the charging control method according to any one of the preceding embodiments to be implemented.

According to a fifth aspect of the disclosure, there is provided a vehicle. The vehicle includes the charging switching apparatus according to any one of the preceding embodiments, or the charging control system according to any one of the preceding embodiments.

According to the disclosure, the problem of a voltage mismatch between the charging facility and the battery that needs to be charged can be solved at a lower hardware cost. Further, the boost charging mode may be included, and the safety problems such as an electric shock can be solved.

### BRIEF DESCRIPTION OF THE DRAWINGS

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:
FIG. 1 is a schematic diagram of a modular structure of a charging switching apparatus 100 according to one or more embodiments of the disclosure;
FIG. 2A to FIG. 2G are schematic diagrams of a circuit structure of a charging control system 200 according to one or more embodiments of the disclosure;
FIG. 3 is a schematic flowchart of a charging control method 300 according to one or more embodiments of the disclosure; and
FIG. 4 is a schematic flowchart of a process 400 for charging mode selection and switching according to one or more embodiments of the disclosure.

### DETAILED DESCRIPTION OF EMBODIMENTS

Exemplary embodiments of the disclosure are described in detail below, and examples of these embodiments are illustrated in the drawings. It should be noted that the following description is provided for explanation and illustration, and therefore should not be construed as limiting the disclosure. Without departing from the principle of the disclosure, those skilled in the art can make, according to actual requirements, electrical, mechanical, logical, and structural changes to these embodiments without departing from the scope of the disclosure. Further, those skilled in the art can understand that for any specific application scenario or actual requirement, it is possible to combine one or more features of the different embodiments described below.

The terms such as "include" and "comprise" are used to indicate that in addition to units and steps that are directly and clearly described in this specification, other units and steps that are not directly or clearly described are not excluded in the technical solutions of the disclosure. The terms such as "first" and "second" are not used to indicate sequences of the units in terms of time, space, size, etc., and are merely used to distinguish between the units.

In the following description, many specific details such as examples of specific components, circuits, and processes are set forth, to provide a thorough understanding of the disclosure. In addition, in the following description and for the purpose of explanation, specific nomenclature is set forth to provide a thorough understanding of the aspects of the disclosure. However, it is obvious for those skilled in the art that an example implementation can be practiced without these specific details. In other examples, well-known circuits and devices are shown in the form of a block diagram to avoid obscurity from occurring in the disclosure.

In the context of the disclosure, the terms "battery", or "high-voltage battery pack" may be used interchangeably, which may be understood as an apparatus providing a power source to a power consuming apparatus. Optionally, the battery may include, but is not limited to, a lithium-ion battery, a lithium metal battery, a lead-acid battery, a nickel-cadmium battery, a nickel-metal hydride battery, a lithium sulfur battery, a lithium air battery, a sodium-ion battery, etc. Optionally, the power consuming apparatus may include transportation, such as a vehicle and a ship, equipped with a traction battery. In the context of the disclosure, a vehicle is used as an example to set forth various specific implementations of a charging control solution for a battery according to one or more embodiments of the disclosure in detail.

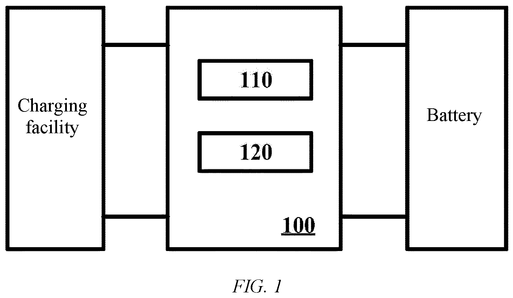

FIG. 1 is a schematic diagram of a modular structure of a charging switching apparatus 100 according to one or more embodiments of the disclosure.

As shown in FIG. 1, the charging switching apparatus 100 is connected between a battery of a vehicle and a charging facility external to the vehicle, and includes a boost capacitor 110 and a first switch 120. The charging switching apparatus 100 is configured to perform boost charging on the battery of the vehicle via the boost capacitor 110 and an inductance of a motor winding of the vehicle by using the charging facility in a boost charging mode, where the first switch 120 is connected between the boost capacitor 110 and one of two output terminals of the charging facility. The charging facility may, for example, include a charging pile, a charging device, a movable charging device, a battery swap facility, etc.

The charging switching apparatus 100 may be connected across two electrodes of the battery which is connected to the external charging facility (e.g., the charging pile) via the charging switching apparatus 100. The charging switching apparatus 100 thus has a circuit structure capable of connecting the two terminals of the charging facility to the two electrodes of the battery. For example, the charging switching apparatus has two buses which may be the same as positive and negative buses of the battery. The charging switching apparatus 100 may be internally provided with the boost capacitor 110, and the boost capacitor 110 may be connected to a neutral point of a motor winding of a motor drive system of the vehicle, so that the boost capacitor can form a boost circuit together with the motor winding and a corresponding motor drive circuit by means of an appropriate circuit configuration. Thus, when the charging facility is connected, boost charging can be performed through such a boost circuit. It can be understood that in the case of boost charging, a terminal of the boost capacitor 110 is connected to an electrode of the battery, and another terminal of the boost capacitor is connected to the neutral point of the motor winding and connected to the other electrode of the battery via the inductance and a switching bridge arm in the motor drive system. It can also be understood that energy storage (precharging) of the boost capacitor 110 may be performed through the battery prior to the boost charging. In this case, the charging facility is disconnected from the battery for subsequent capacitor-inductance boost charging. After the boost capacitor 110 is precharged to a set target value, the charging switching apparatus 100 may be physically connected to the charging facility to form a charging circuit.

The charging switching apparatus 100 according to the disclosure facilitates decoupling from and switching between a direct charging mode and the boost charging mode, which solves the problem that a vehicle on a high-voltage (e.g. 800 V) platform cannot be charged through a provided low-voltage (e.g. 750 V, or 500 V) charging facility. Moreover, such switching and boost charging can be achieved with less hardware, so that the use of hardware resources (for example, an additional voltage conversion apparatus) can be reduced, thereby reducing hardware cost, volume, and vehicle weight. The first switch 120 is provided so that in some safety-critical scenarios (e.g., in scenarios where a charging port cover is opened and a charging gun is not connected), the charging circuit may cut off a contact path between high-voltage side energy and a human body, which eliminates a risk of a charging port electrified with a high voltage, thereby avoiding safety accidents such as an electric shock. In this way, the control of the motor drive system is simplified while ensuring safety under a high voltage. For example, the charging facility is disconnected after the charging is completed, and thus, there is no need to force the motor drive system to discharge energy in the boost capacitor for ensuring safety.

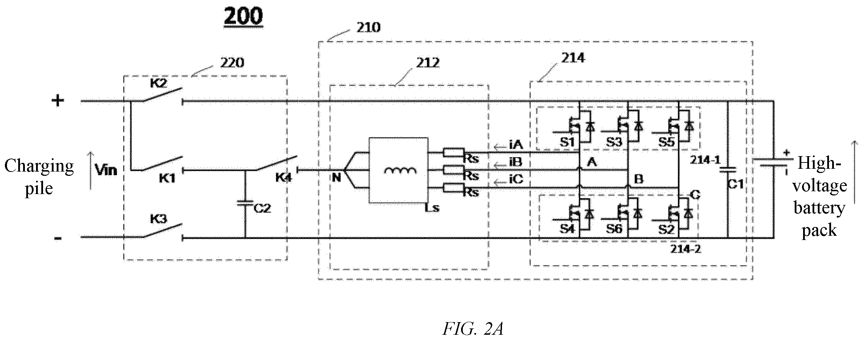

It can be understood that a capacitor-inductance boost structure topology in the charging switching apparatus 100 may be any circuit structure topology that implements a capacitor-inductance boost function. For example, FIG. 2A to FIG. 2G show an example of a capacitor-inductance boost structure formed by a capacitor C2, a switch K4, and an inductance Ls of a three-phase motor winding through a neutral point of the winding, a bridge arm circuit, and an electrode of a battery according to one or more embodiments.

In some embodiments, the charging switching apparatus 100 may further be configured to connect the two output terminals of the charging facility to positive and negative buses of the battery in a direct charging mode, to directly charge the battery of the vehicle. In this way, the first switch, and/or the boost capacitor, etc. may be disconnected from the charging circuit, and the battery may be charged directly by using the charging facility. The charging switching apparatus may be under the control of some control signals so that the charging switching apparatus operates in the direct charging mode or the boost charging mode, or is switched between the two modes. These control signals may be sent, for example, by a vehicle controller. The vehicle controller may determine whether to perform direct charging based on some decision logic, for example, a comparison between a battery voltage and a charging facility voltage.

In some embodiments, the charging switching apparatus 100 may further be configured to connect a terminal of the boost capacitor 110 connected to the first switch 120 to the neutral point of the motor winding in the boost charging mode for precharging the boost capacitor 110 (in this case, the first switch is in an off state), and respectively connect the two output terminals of the charging facility to the neutral point and one of the two electrodes of the battery after precharging of the boost capacitor 110 is completed. Specifically, after it is determined that the boost charging is to be performed, the charging facility is disconnected from the charging switching apparatus 100 prior to the precharing of the boost capacitor 110, so that the precharging of the boost capacitor is not affected. Then, the boost capacitor is connected between an electrode of the battery and the neutral point of the winding. In this way, the battery and the boost capacitor 110 may form an on path by means of on/off control of a switch in a bridge arm switch circuit of the winding, thereby enabling the battery to start to precharge the boost capacitor 110 and the inductance of the winding through the motor drive system. During this process, the first switch, the second switch, and the third switch remain in an off state, that is, remain physically disconnected from the charging facility, since if physical connection to the charging facility is kept in this case, a charging pile side may be affected to some degree, leading to a failure in the start of charging, such as an insulation abnormality of a charging pile which may causes a situation that an insulation voltage of the pile side cannot be obtained accurately.

In some embodiments, the charging switching apparatus 100 may further include a second switch K2, a third switch K3, and a fourth switch K4, where the second switch K2 and the third switch K3 are respectively arranged on the two, positive and negative buses between the charging facility and the battery, the fourth switch K4 is connected between the terminal of the boost capacitor 110 connected to the first switch K1 and the neutral point, and the other terminal of the boost capacitor 110 is connected to one of the two electrodes of the battery. For example, these switches may be a first switch K1, a second switch K2, a third switch K3, and the fourth switch K4 as will be described below with reference to embodiments in FIG. 2A to FIG. 2G. A specific description will be given below to various specific embodiments of arrangements of the switches and the boost capacitor. By means of the position arrangements of the switches of the charging switching apparatus 100, the charging safety problems in the two charging modes can be solved.

In some embodiments, the charging switching apparatus 100 may further be configured to turn off the first switch K1 in response to a charging end signal. In this way, various elements of the charging switching apparatus 100, including the boost capacitor 110, may be quickly disconnected from the charging facility at the end of charging. Therefore, for example, when performing unplugging at the charging port for disengaging from the charging facility, the human body is disconnected from the boost capacitor 110 and the inductance of the winding, which are energy storage elements that have not been fully discharged. Accordingly, possible safety problems (such as an electric shock) are avoided. It can be understood that the switches K2 and/or K3 are also turned off along with the first switch K1 at the end of charging.

FIG. 2A to FIG. 2G are schematic diagrams of a circuit structure of a charging control system 200 according to one or more embodiments of the disclosure. The charging control system 200 may be connected between a charging facility (illustrated as a charging pile and providing a charging voltage Vin) and a high-voltage battery pack (a battery), and includes a motor drive system 210 and a charging switching apparatus 220.

As shown in FIG. 2A, the motor drive system 210 is connected across two electrodes of the high-voltage battery pack, and includes a motor winding 212 and a switching bridge arm circuit 214 (or referred to as an inverter 214). The switching bridge arm circuit 214 may, for example, be formed by two sets of switches. A first set of bridge arm switches 214-1 includes switches S1, S3, and S5 (of an upper bridge arm), and a second set of bridge arm switches 214-2 includes switches S2, S4, and S6 (of a lower bridge arm). The motor winding 212 is illustrated in the figure as a three-phase winding. The inductance of the three-phase winding is collectively referred to as Ls. A point N is a neutral point of the winding. The motor winding 212 (which may for example be equivalent to three resistors Rs) connects inputs of three phases to midpoints A/B/C of bridge arm circuit branches, and may, for example, have currents iA, iB, and iC flowing therethrough. Optionally, the switching bridge arm circuit 214 may further include a capacitor C1 connected across two sides of the high-voltage battery pack. The switches in the charging control system 200 (including the switches of the charging switching apparatus 220, and/or the switches of the switching bridge arm circuit 214) may be controlled through a vehicle control system/controller such as a digital signal processing (DSP) control module.

The charging switching apparatus 220 includes the switches K1 to K4 and the boost capacitor C2. As described above, the switches K2 and K3 are arranged on charging buses, so that the charging pile may directly charge the high-voltage battery pack at the voltage Vin when only the switches K2 and K3 are turned on, which is suitable for a situation where a voltage required by the battery is consistent with that supplied by the charging pile. The switch K1 (the first switch) is then arranged between a bus input (i.e. as shown in FIG. 2A to FIG. 2D, an input terminal connected to a positive electrode of the charging pile, or an input terminal connected to a negative electrode of the charging pile, for example) of the charging switching apparatus 220, and a terminal of the boost capacitor C2. The other terminal of the boost capacitor C2 is connected to an electrode (shown as a negative electrode in FIG 2A to FIG. 2D, but it may alternatively be a positive electrode) of the high-voltage battery pack. The switch K4 is connected between a terminal of the boost capacitor C2 connected to the first switch K1, and the neutral point N.

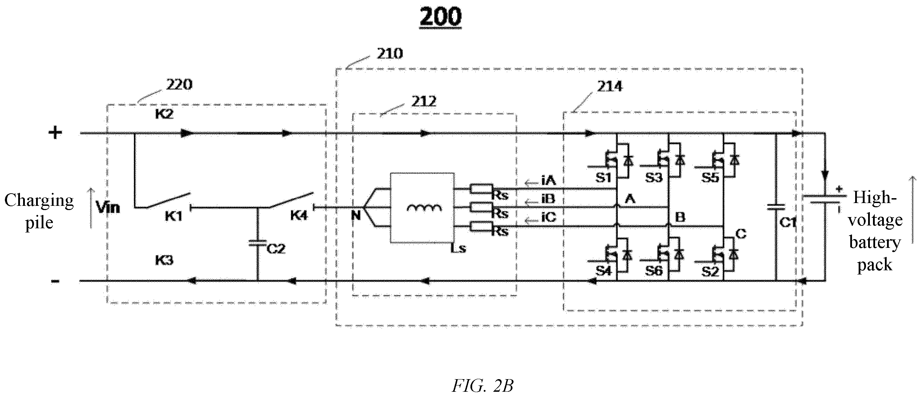

In FIG. 2B, a flow of energy in the circuit when the direct charging mode is selected/determined is shown. It can be understood that, when, for example, a user uses the charging pile for charging (plugs in a charging gun), a communication connection is established between a vehicle and the charging pile, and a charging pile system and/or a vehicle system may determine whether to enter the direct charging mode or the boost charging mode based on readings of parameters such as a voltage. After it is determined to ender the direct charging mode, as shown in FIG. 2B, the switches K2 and K3 are switched on to directly connect electrical energy input by the charging facility to the positive and negative electrodes of the high-voltage battery pack, while the switches K1 and K4 is kept in an off state, thereby performing direct charging. After the charging is completed, the switches K2 and K3 may be turned off directly in response to the charging end signal.

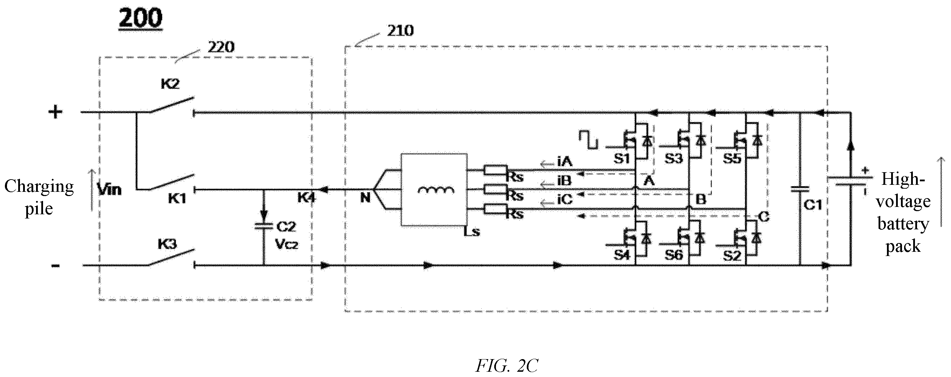

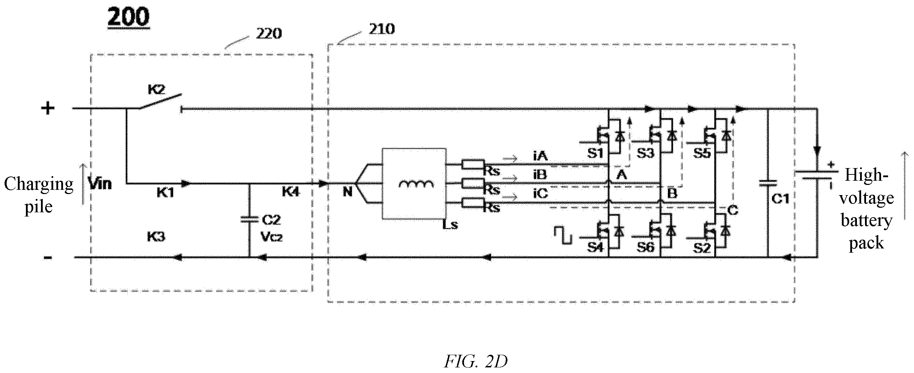

FIG. 2C shows operations after it is determined to enter the boost charging mode. In this case, a control signal may first be sent to turn on K4 (K1 to K3 are in an initial off state). Then, through on/off control of one or more bridge arms of the switching bridge arm circuit (the inverter) (for example, on/off control of the first set of bridge arm switches including the switching transistors S 1, S3, and S5), the boost capacitor C2 is connected across the battery, and the boost capacitor C2 is precharged to a target precharging value. A magnitude of the target precharging value may be determined based on a boost amplitude of boost charging required to be performed. It can be understood that a precharging voltage of the boost capacitor C2 may be equal to the precharging target value, which may, for example, fall within an output voltage range of the charging pile. After the precharging of the boost capacitor C2 is completed, as shown in FIG. 2D, K1 and K3 may be turned on to connect the high-voltage battery pack and the charging pile, and a switch control signal of the switching bridge arm circuit is configured to be switched to the boost charging mode. In this case, through on/off control of the switching transistors S 1, S3, and S5 of the first set of bridge arm switches, and the switching transistors S2, S4, and S6 of the second set of bridge arm switches, the winding inductance Ls is charged, and the boost capacitor C2 provides a voltage V_{C2}, so that a voltage of the charging pile is boosted to a voltage level required by the high-voltage battery pack. At the end of the boost charging, the charging pile side or a vehicle side may, for example, send a charging stop message. In this case, the charging facility may be disconnected from the battery (i.e. the first switch, the second switch, and the third switch are turned off), and the motor drive system may exit an operating mode directly. In addition, after the K4 is turned off, the switching bridge arm circuit (the inverter) may also stop controlling the switching transistors of the switching bridge arm circuit, so that the boost charging mode is exited.

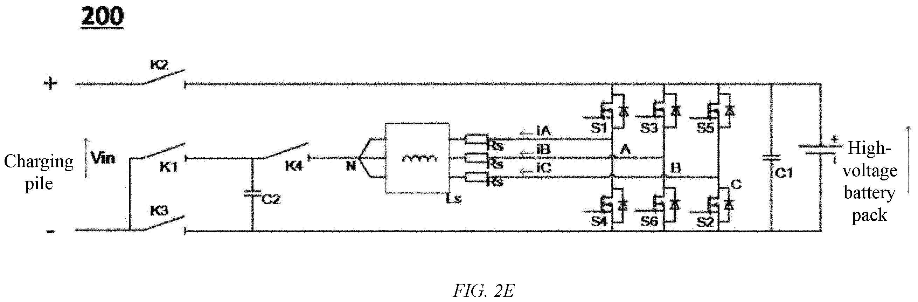

It can be understood that the boost capacitor C2 may actually be connected between either electrode of the battery, and the neutral point. Accordingly, the first switch K1 may also be actually connected to any input of the charging switching apparatus 220 (i.e. to the positive or negative input of the charging pile), which results in three circuit structure topologies as shown in FIG. 2E to FIG. 2G.

In FIG. 2E, the switches K2 and K3 function as control switches for the positive and negative buses, and when the switches K2 and K3 are turned on and the other switches K1 and K4 are turned off, the direct charging mode may be entered. When the boost charging mode is selected, the boost capacitor C2 is also precharged by the battery via the neutral point and the switch K4. After the precharging is completed, the switches K1 and K2 are turned on, and then, through on/off control of the switching transistors of the upper half bridge (the first set of switches of the switching bridge arm circuit) and of the lower half bridge (the second set of bridge arm switches of the switching bridge arm circuit) of the inverter, the boost charging is performed.

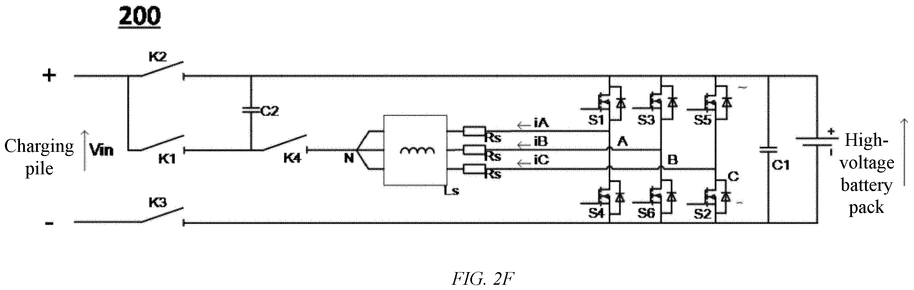

In FIG. 2F, the switches K2 and K3 function as control switches for the positive and negative buses, and when the switches K2 and K3 are turned on and the other switches K1 and K4 are turned off, the direct charging mode may be entered. In the boost charging mode, the boost capacitor C2 is also precharged by the battery via the neutral point and by turning on the switch K4. After the precharging is completed, the switches K1 and K3 are turned on, and then, through on/off control of the switching transistors of the upper half bridge (the first set of bridge arm switches of the switching bridge arm circuit) and of the lower half bridge (the second set of bridge arm switches of the switching bridge arm circuit) of the inverter, the boost charging is performed.

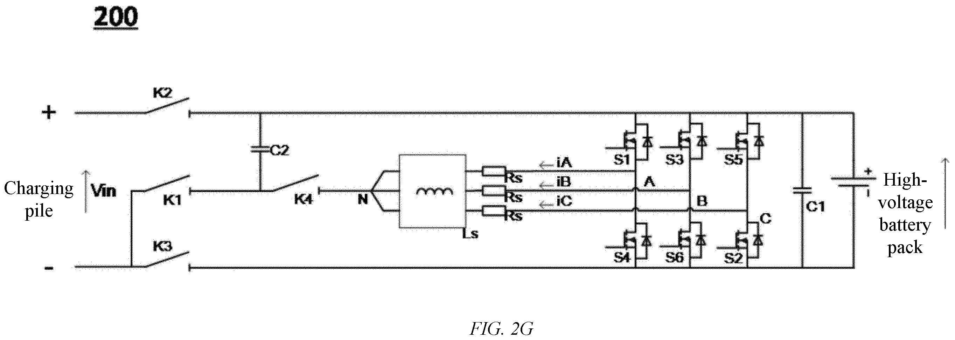

In FIG. 2G, the switches K2 and K3 function as control switches for the positive and negative buses, and when the switches K2 and K3 are turned on and the other switches K1 and K4 are turned off, the direct charging mode may be entered. In the boost charging mode, the boost capacitor C2 is also precharged by the battery via the neutral point and the switch K4. After the precharging is completed, the switches K1 and K2 are turned on, and then, through on/off control of the switching transistors of the upper half bridge (the first set of bridge arm switches of the switching bridge arm circuit) and of the lower half bridge (the second set of bridge arm switches of the switching bridge arm circuit) of the inverter, the boost charging is performed.

Herein, as mentioned previously, the control of the various switches (including the switches of the charging switching apparatus, and the switches of the switching bridge arm circuit of the motor drive system) may be implemented, for example, by a control module of an onboard system, an electronic control unit (ECU), etc. Certainly, the control may alternatively be implemented by a further device of the user in a wireless or wired manner. For example, a mobile device of the user is used to perform the on/off control of the switches in the charging switching apparatus and in the charging control system, enabling the selection of the charging mode.

Herein, although S 1 to S6 are shown as power switching devices (the switching transistors) in FIG. 2A, the power switching devices S 1 to S6 may alternatively be implemented as insulated gate bipolar transistors (IGBT), metal oxide semiconductor field effect transistors (MOSFET), bipolar junction transistors (BJT), super junction transistors (SJT), etc. without departing from the spirit and scope of the disclosure.

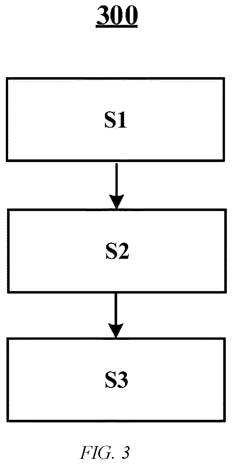

FIG. 3 is a schematic flowchart of a charging control method 300 according to one or more embodiments of the disclosure. The charging control method 300 is used to control the charging control system 200 according to any of the preceding embodiments. The charging control method 300 includes the following steps.

At step S 1, a boost capacitor is precharged in response to a boost charging control signal. That is, a portion of the boost charging control signal may control, for example, the switches of the charging switching apparatus 220 in the charging control system 200, so that the switch K4 is turned on and the switches K1 to K3 are turned off, and the other portion of the boost charging control signal may control the switching transistors in the switching bridge arm circuit (the inverter) to cooperate with the switch K4 for charging the boost capacitor C2 by using the vehicle battery.

At step S2, a battery is connected to a charging facility via a neutral point of a motor winding of a charging control system, and positive and negative buses of the battery. After the charging (precharging) of the boost capacitor C2 is completed, through control of the switches by the control signal, two inputs of the charging facility may pass through the neutral point of the motor winding and one of the buses of the battery to charge the battery.

At step S3, boost charging is performed on the battery via the precharged boost capacitor and an inductance of the motor winding by controlling a plurality of bridge arm switches of a motor drive system. That is, the control signal further performs on/off control on the switches S 1 to S6 of the motor drive system, to implement the boost charging from the charging facility via a boost structure having the boost capacitor and the winding inductance.

In this method, for corresponding arrangements and timing control logic of the switches, reference may be made to the various embodiments described above in relation to the charging switching apparatus 100 and the charging control system 200. Details are not repeated herein.

In some embodiments, the charging control method 300 may further include the step of connecting the two output terminals of the charging facility to the positive and negative buses of the battery in response to a direct charging control signal, to directly charge the vehicle battery. It can be understood that this step applies to a scenario where it is determined to entera direct charging mode based on voltage parameter detection when the charging facility is connected, in which case the switches K1 and K4 is kept in an off state, and only the switches K2 and K3 need to be turned on. Moreover, this step also applies to a scenario where the direct charging mode is entered from a boost charging mode through conversion, in which case the switches K1 and K4 are turned off, and then the switches K2 and K3 are turned on.

Therefore, in some embodiments, the charging control method 300 may further include the step of turning off the first switch K1 in response to a charging end signal. This may ensure that a human body may contact with a connection between a plugged gun and the capacitor and inductance at the end of the boost charging via the capacitor and inductance, thereby avoiding safety problems. It can be understood that the switches K2 and/or K3 are also turned off along with the first switch K1 at the end of charging.

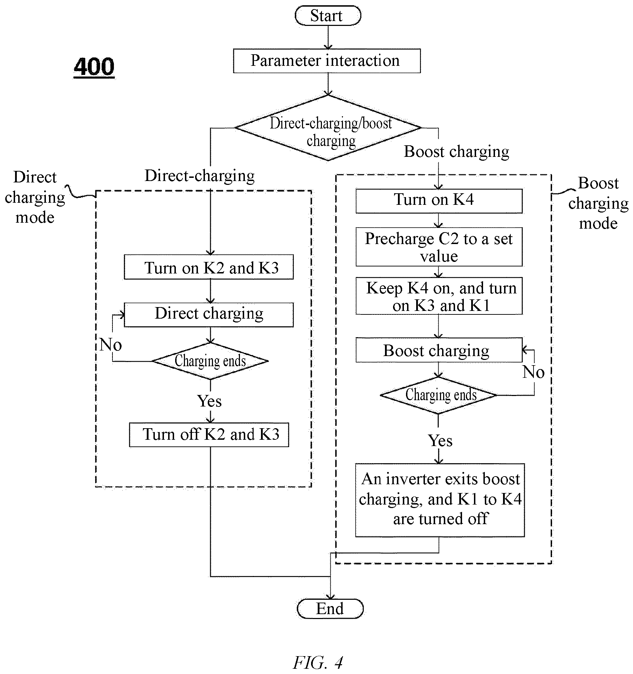

FIG. 4 is a schematic diagram of a flowchart 500 for charging mode selection and switching according to one or more embodiments of the disclosure. After a charging pile is connected to a vehicle, a parameter interaction phase is entered. A vehicle controller determines whether to enter a direct-charging (direct charging) mode or a boost charging mode, and sends a corresponding charging control signal. For example, the charging control signal may be generated based on a comparison between a magnitude of a maximum voltage of the charging pile and a magnitude of an open circuit voltage of a high-voltage battery pack. When the magnitude of the maximum voltage of the charging pile is less than the magnitude of the open circuit voltage of the high-voltage battery pack, a charging control signal for the boost charging mode may be generated; or when the magnitude of the maximum voltage of the charging pile is greater than or equal to the magnitude of the open circuit voltage of the high-voltage battery pack, a charging control signal for the direct-charging mode may be generated. In the direct-charging mode, switches K2 and K3 are controlled to be turned on, so as to enter direct charging. Then, it is continuously detected whether a charging end signal is received, and the switches K2 and K3 are turned off if the charging end signal is received. In the boost charging mode, the switch K4 is first turned on to connect the boost capacitor C2 across the battery. Then, after C2 is precharged to a set value, K4 is kept on, and switch K1 and the switch K3 (or K1 and K2 in other embodiments) are turned on for boost charging until the charging end signal is received. Next, switches of an inverter (a switching bridge arm circuit) may be controlled to exit boost charging, and the switch K1 is turned off. Optionally, the switches K2 and/or K3 and/or K4 may further be turned off. In this way, free and safe switching between the two charging modes can be implemented through a cost-effective structure. For example, the plurality of switches and the three-phase winding are apparatuses or components already present in the vehicle, which enables the reuse of the switching elements and the motor drive system which are already present in the vehicle, without the need for an additional voltage conversion apparatus inside the vehicle. Therefore, vehicle cost and vehicle weight are reduced, a layout of a vehicle-mounted power harness is improved, and the charging compatibility and safety of the vehicle is enhanced.

In another aspect, the disclosure further provides an electronic device. The electronic device includes a processor, and a memory storing instructions that, when executed by the processor, cause the charging control method 300 according to any one of the preceding embodiments to be implemented. The memory in the disclosure includes various types of computer storage media, and may be any usable medium accessible to a general-purpose or special-purpose computer. For example, the computer-readable medium may include a RAM, a ROM, an EPROM, an E2PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal or an onboard system. In an alternative solution, the processor and the storage medium may reside as discrete assemblies in a user terminal or an onboard system.

In still another aspect, the disclosure further provides a vehicle. The vehicle includes the charging switching apparatus 100 according to any one of the preceding embodiments, or the charging control system 200 according to any one of the embodiments. The vehicle in the disclosure is intended to indicate any suitable vehicle having a drive system, for example, a fuel-powered vehicle, a hybrid vehicle, an electric vehicle, a plug-in hybrid electric vehicle, and the like.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A charging switching apparatus, which is connected between a battery of a vehicle and a charging facility external to the vehicle, and comprises a boost capacitor and a first switch, wherein the charging switching apparatus is configured to
perform boost charging on the battery of the vehicle via the boost capacitor and an inductance of a motor winding of the vehicle by using the charging facility in a boost charging mode,
wherein the first switch is connected between the boost capacitor and one of two output terminals of the charging facility.

2. The charging switching apparatus according to claim 1, wherein the charging switching apparatus is further configured to
connect the two output terminals of the charging facility to positive and negative buses of the battery in a direct charging mode, to directly charge the battery of the vehicle.

3. The charging switching apparatus according to claim 1 or 2, wherein the charging switching apparatus is further configured to
connect a terminal of the boost capacitor connected to the first switch to a neutral point of the motor winding in the boost charging mode for precharging the boost capacitor, and respectively connect the two output terminals of the charging facility to the neutral point and one of two electrodes of the battery after precharging of the boost capacitor is completed.

4. The charging switching apparatus according to claim 1, 2, or 3, further comprising a second switch, a third switch, and a fourth switch, wherein the second switch and the third switch are respectively arranged on a positive bus and a negative bus between the charging facility and the battery, the fourth switch is connected between a terminal of the boost capacitor connected to the first switch and a neutral point of the motor winding, and the other terminal of the boost capacitor is connected to one of two electrodes of the battery.

5. The charging switching apparatus according to any one of claims 1 to 4, wherein the charging switching apparatus is further configured to turn off the first switch in response to a charging end signal.

6. A charging control system, which is connected between a charging facility and a battery, the system comprising:
a motor drive system connected across two electrodes of the battery and comprising a motor winding; and
the charging switching apparatus according to any one of claims 1 to 5.

7. A charging control method for controlling the charging control system according to claim 6, the method comprising the steps of:
S 1: precharging the boost capacitor in response to a boost charging control signal;
S2: connecting the battery to the charging facility via a neutral point of the motor winding of the charging control system, and positive and negative buses of the battery; and
S3: performing boost charging on the battery via the precharged boost capacitor and the inductance of the motor winding by controlling a plurality of bridge arm switches of the motor drive system.

8. The charging control method according to claim 7, further comprising:
connecting the two output terminals of the charging facility to the positive and negative buses of the battery in response to a direct charging control signal, to directly charge the battery.

9. The charging control method according to claim 7 or 8, further comprising:
turning off the first switch in response to a charging end signal.

10. An electronic device, comprising a processor, and a memory storing instructions that, when executed by the processor, cause the charging control method according to any one of claims 7 to 9 to be implemented.

11. A vehicle, comprising the charging switching apparatus according to any one of claims 1 to 5, or the charging control system according to claim 6.
